Europäisches Patentamt

European Patent Office

Office européen des brevets

(19)

(11) EP 1 388 929 A2

## (12) EUROPEAN PATENT APPLICATION

(43) Date of publication:
**11.02.2004 Bulletin 2004/07**

(51) Int Cl.⁷: **H02M 7/48**

(21) Application number: **03017742.2**

(22) Date of filing: **04.08.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) Inventors:<br>• **Norrga, Staffan**<br>  **112 29 Stockholm (SE)**<br>• **Bijlenga, Bo**<br>  **662 33 Amal (SE)** |
| (30) Priority: **08.08.2002 SE 0202378** | (74) Representative: **Olsson, Jan et al**<br>**Bjerkéns Patentbyra KB**<br>**P.O.Box 1274**<br>**801 37 Gävle (SE)** |
| (71) Applicant: **ABB AB**<br>**721 83 Västeras (SE)** | |

(54) **A converter and a method for control thereof**

(57)    A converter has a resonance circuit with an auxiliary valve (18), an inductor (17) and capacitive members (15) for assisting the commutation of the converter. A control arrangement (24) is adapted to control turning-on and turning-off of controllable semiconductor devices of the main valve of the converter and controllable semiconductor components of the auxiliary valve.

Means are arranged for measuring the current in the phase output (10) of the converter. When carrying out two subsequent commutation processes for changing the phase potential on the phase output from the potential of a first of the poles of a direct voltage side of the converter to that of a second of the poles and then back to the one of the first pole the second commutation process is started before the first one has been completed.

Fig 1

EP 1 388 929 A2

**Description**

FIELD OF THE INVENTION AND PRIOR ART

The present invention relates to a converter according to the preamble of claim 1 and a method for control of such a converter.

The invention relates especially to a VSC-converter. A VSC-converter for connection between a direct voltage network and an alternating voltage network is already known through for example the thesis "PWM and control of two and three level High Power Voltage Source Converters" by Anders Lindberg, Kungliga Tekniska Högskolan, Stockholm, 1995, in which publication a plant for transmission of electric power through a direct voltage network for high voltage direct current (HVDC) while utilizing such converters is described. Known are also plants for transmitting electric power between a direct voltage network and an alternating voltage network based on line-commutated CSC (Current Source Converters) -converters used in stations for power transmission. However, another way to proceed is described in this thesis, which is based on instead using VSC (Voltage Source Converter) - converters for forced commutation for transmitting electric power between a direct voltage network being thereby voltage-stiff, in the actual case for high voltage direct current, and alternating voltage networks connected thereto, which offers a plurality of considerable advantages with respect to the use of line-commutated CSC-converters in HVDC, among which it may be mentioned that the flow of active and reactive power may be controlled independently of each other and there is no risk for commutation faults in the converter and thereby no risk for transfer of commutation faults between the different HVDC-links, which may be the case with line-commutated CSC-converters. Furthermore, it is possible to feed a weak alternating voltage network or a network without any generation of its own (a dead alternating voltage network). Further advantages are also there.

The converter according to the invention may be a part of a plant for transmitting electric power through a direct voltage network for high voltage direct current (HVDC), so as to for example transmit electric power from the direct voltage network to an alternating voltage network. The converter has in this case a direct voltage side thereof connected to the direct voltage network and the alternating voltage side thereof connected to the alternating voltage network. However, the converter according to the invention may also be directly connected to a load, such as a high voltage generator or motor, in which the converter has either the direct voltage side thereof or the alternating voltage side thereof connected to the generator/the motor. The invention is not restricted to these applications, but the converter may just as well be adapted for conversion in an SVC (Static Var Compensator) or in a back-to-back station. The voltages on the direct voltage side of the converter are advantageously high, 10-400 kV, preferably 130-400 kV. The converter according to the invention may also be a part of other types of FACTS-devices (FACTS = Flexible Alternating Current Transmission) than those mentioned above.

It is already known to arrange capacitive members in the form of so called snubber capacitors connected in parallel with the respective controllable semiconductor device so as to restrict the turn-off losses in the controllable semiconductor devices of the current valves of the converter, i.e. the losses in the controllable semiconductor devices when these are turned off. It is also known to provide the converter with a so-called resonance circuit for recharging said snubber capacitors in connection with commutation of the phase current. It gets hereby also possible to restrict turn-on losses in the controllable semiconductor devices of the current valves, i.e. the losses in the controllable semiconductor devices when these are turned on.

One type of the converter provided with a resonance circuit developed and used is the ARCP-converter already known (ARCP = Auxiliary Resonant Commutated Pole). An ARCP-converter comprises a series connection of at least two intermediate link capacitors between the two poles of the direct voltage side of the converter, which series connection is through a midpoint, hereinafter called intermediate link midpoint, divided into two equal parts so as to in the intermediate link midpoint provide a potential substantially corresponding to the average of the potentials of the two poles. A converter of this type is already known from for example US 5 047 913.

A converter according to the invention is preferably controlled through so called PWM-modulation, which in a voltage-stiff two level converter is characterized by changing the phase potential on one of the phase outputs between two discrete levels $-U_d/2$ and $+U_d/2$ (the phase potential is then related to the midpoint of the intermediate link). The time average of the frequency by which the change takes place is usually constant and is called the commutation frequency or switching frequency. The change between the two levels shall in the ideal case be instantaneous, but it occurs in the practice during a definite period of time during which the phase potential gradually changes from one level to the other. This is especially the case in converters of quasi-resonant type, such as ARCP-converters. It may under certain circumstances be desired from the modulation point of view to be able to rapidly carry out a commutation sequence meaning a phase potential change from one pole to the other and back ($+U_d/2 \rightarrow -U_d/2 \rightarrow +U_d/2$ or $-U_d/2 \rightarrow +U_d/2 \rightarrow -U_d/2$). Expressed in another way, this means that the time integral, called $\Psi_{comm}$, of the voltage difference by which the phase potential deviates from the potential of the first pole, shall be made as small as possible in a commutation sequence being as quick as possible. It may then be desired to make said time integral smaller than achievable by performing a conventional commutation from the first pole to the second pole and then without any delay a conventional commutation from the second pole back to the first pole. It should be noted that the first and the second pole, respectively, in said process may be constituted by both poles of the direct voltage intermediate link.

The duration of the commutations in a converter of the type described in US 5 047 913 is as mentioned normally longer than in conventional so called hard-switched converters. This duration depends upon the magnitude of the phase current. These slow commutations constitute a drawback, since they restrict the maximum modulation degree of the converter. The modulation degree $\alpha$ is defined as the relationship between on one hand the average of the phase potential during a commutation interval (i.e. an interval with the duration $1/f_{sw}$, where $f_{sw}$ is the commutation frequency) and on the other half the voltage between said two poles of the direct voltage side of the converter.

$$\alpha = \frac{2f_{sw}}{U_d} \left| \int_{t}^{t+1/f_{sw}} u_{ph} dt \right|$$

This maximum modulation degree may be expressed as:

$$\alpha_{max} = 1 - 2f_{sw}\Psi_{comm}/U_d$$

in which $f_{sw}$ is the commutation frequency of the converter and $U_d$ is the voltage between the two poles of the direct voltage side of the converter.

It appears from the preambles of the independent converter and method claim, respectively, that the invention is directed to the way of controlling a converter of this type in that part of the phase current period, in which this is comparatively high and there is normally no requirement of any assistance from the resonance circuit for carrying out a commutation from the state, in which the phase current flows through a controllable semiconductor device of a valve to a state, in which the phase current instead flows through a rectifying member, such as a diode, of another valve.

OBJECT OF THE INVENTION

The object of the present invention is to provide a converter and a method of the type defined in the introduction, which enable an increase of the maximum modulation degree of such a converter at phase currents exceeding a predetermined value.

SUMMARY OF THE INVENTION

Said object is according to the invention obtained by providing a converter and a method according to the appended independent converter and method claims, respectively.

By interlacing two subsequent commutation processes so that a second commutation process is started before the first commutation process has been completed, the voltage time area lost during the two commutation processes may be reduced considerably. This means that the maximum modulation or control degree of the converter may be increased and in the practice more power is delivered on the alternating voltage side of the converter. It will also be possible to obtain a better curve shape on the alternating voltage side and thereby reduce the problems of harmonics.

According to a preferred embodiment of the invention the converter comprises members adapted to compare the phase current measured by said means with $\hat{i}_{res}$, in which

$$\hat{i}_{res} = \frac{U_d}{2} \sqrt{\frac{C_s}{L_{aux}}}$$

in which $U_d$ is the voltage between said two poles on the direct voltage side of the converter, $L_{aux}$ is the inductance of the resonance circuit and $C_s$ is the sum of the total snubber capacitance connected in series for said main valves and when present the capacitance of a capacitor possibly located between the phase output and the intermediate link midpoint, and the control arrangement is adapted to make the limits for said time interval depending upon the result of this comparison. It has been found that the magnitude of the phase current with respect to this peak resonance current through the auxiliary valve $\hat{i}_{res}$ is of vital importance for how big the overlap, i.e. said time interval, may be made between the two commutation processes. By carrying out said comparison the maximum modulation degree of the converter may be increased as much as the conditions in each individual moment allow.

The invention also relates to a computer program and a computer readable medium according to the corresponding appended claims. It is easily understood that the method according to the invention defined in the appended set of method claims is well suited to be carried out through program instructions from a processor which may be influenced by a computer program provided with the program steps in question.

Further preferred embodiments of the converter according to the invention and the method according to the invention appear from the other dependent claims and the following description.

BRIEF DESCRIPTION OF THE DRAWINGS

With reference to the appended drawings, below follows a specific description of preferred embodiments of the invention cited as examples.

Fig 1      is a simplified circuit diagram illustrating a converter according to a first embodiment of the invention,

Fig 2      is a simplified circuit diagram illustrating a converter according to a second embodiment of the invention,

Figs 3-5      show current and voltage curves during different commutation processes,

Fig 6      is a simplified block diagram illustrating the control system for carrying out the method according to the invention,

Fig 7      is a graph illustrating within which current limit values two subsequent commutation processes may be carried out according to the method according to the present invention, and

Figs 8-10      show current and voltage curves during commutation processes for three preferred embodiments of the method according to the invention.

DETAILED DESCRIPTION OF PREFERRED EMBODIMENTS OF THE INVENTION

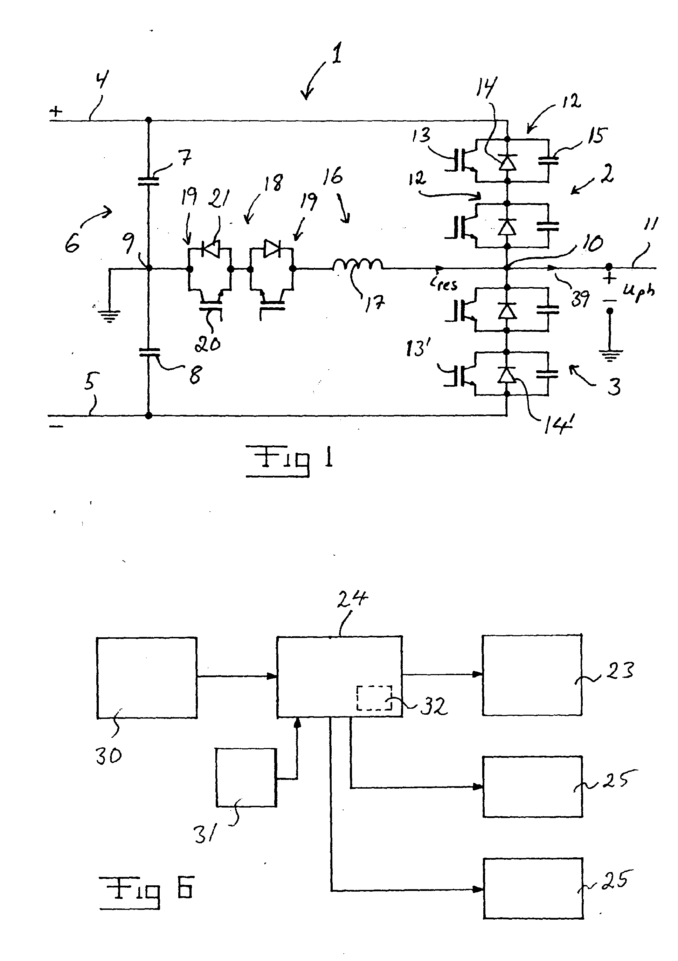

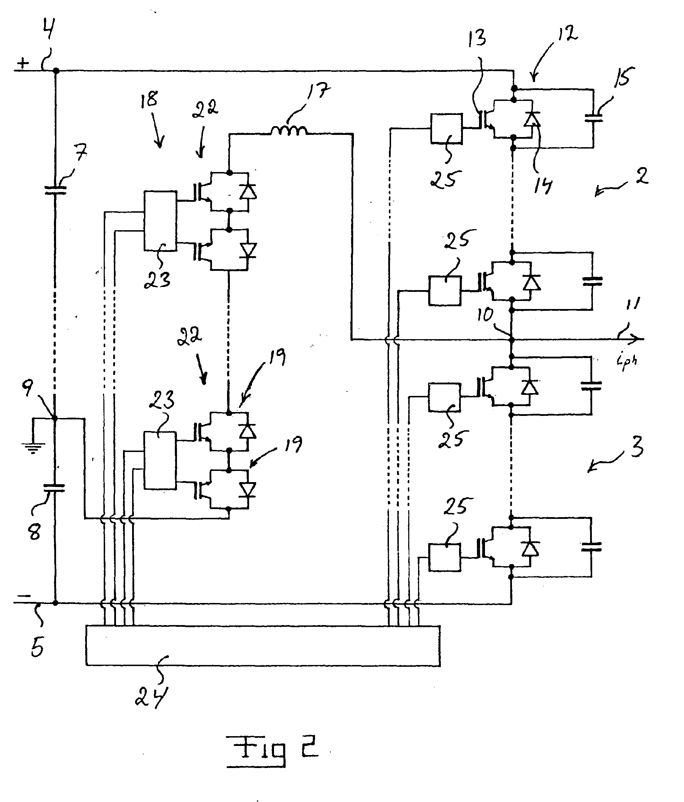

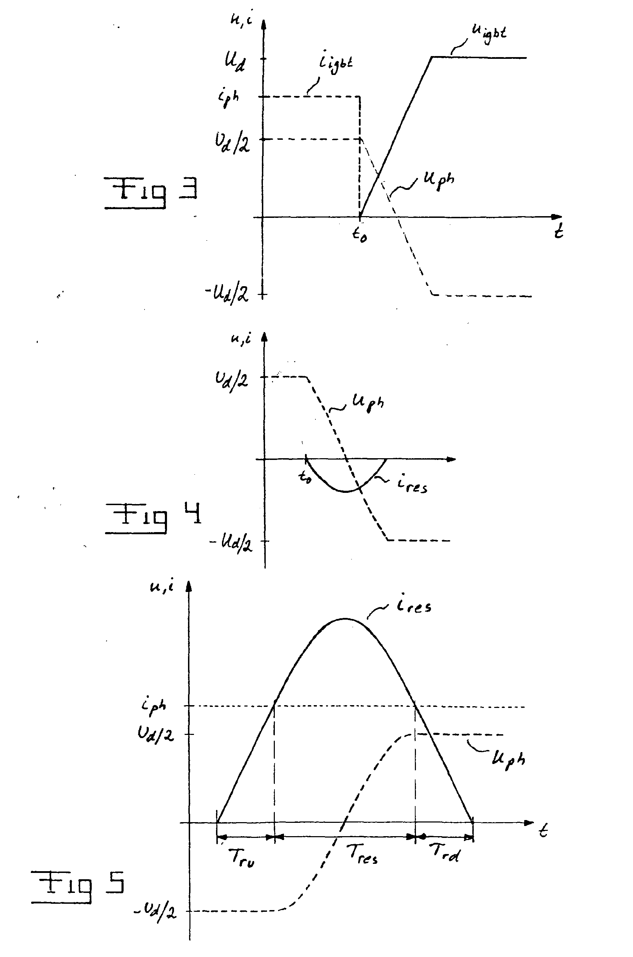

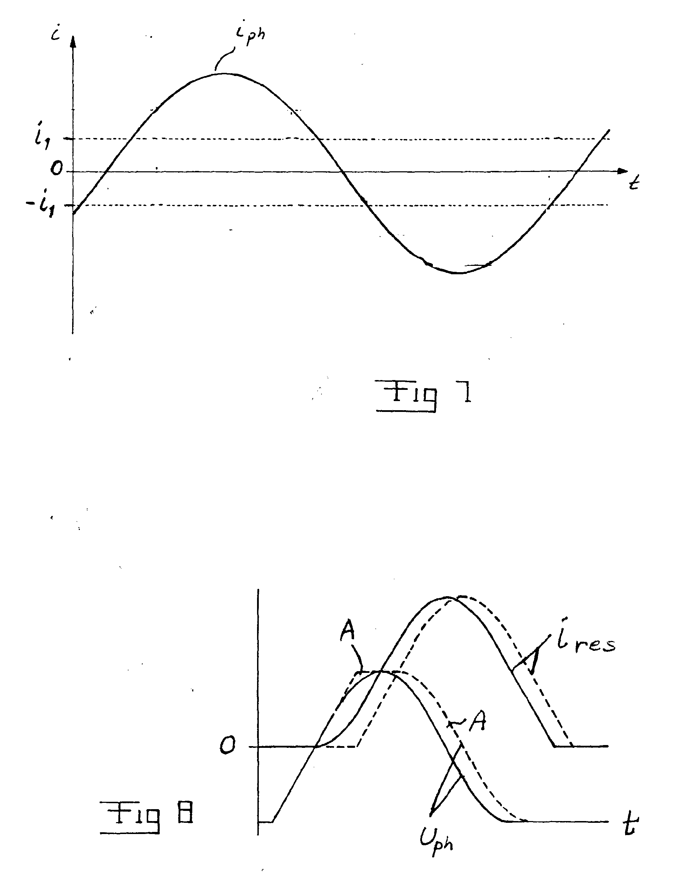

A converter according to an embodiment of the invention is illustrated in Fig 1. The converter is a so-called VSC-converter. Only the part of the converter connected to one phase of an alternating voltage phase line is shown in Fig 1, in which the number of phases is normally three, but it is also possible that this constitutes the entire converter when this is connected to a one phase alternating voltage network. The part shown of the converter constitutes a so called phase leg and a converter adapted for for example a three phase alternating voltage network comprises three phase legs of the type shown.

VSC-converters are known in various embodiments. A VSC-converter comprises in all embodiments a number of so called current valves, hereinafter called main valves, which each comprises a controllable semiconductor device, such as an IGBT (Insulated Gate Bipolar Transistor) or a GTO (Gate Turn-Off Thyristor), and a rectifying member in the form of a diode, a so called free-wheeling diode, connected in anti-parallel therewith. Each controllable semiconductor device is in high voltage applications normally constituted by a number of controllable semiconductor components connected in series and controlled simultaneously, such as a number of individual IGBTs or GTOs. A comparatively high number of such semiconductor devices are namely required in high voltage applications for blocking the voltage to be blocked by each main valve in the blocked state. Each rectifying member is in a corresponding way constituted by a number of rectifying components connected in series. The controllable semiconductor components and rectifying components are in the main valve arranged in a plurality of circuits connected in series, which circuits each comprises among others a controllable semiconductor component and a rectifying component connected in anti-parallel therewith.

The phase leg of the converter 1 illustrated in Fig 1 has two main valves 2, 3 connected in series between the two poles 4, 5 of a direct voltage side of the converter. A direct voltage intermediate link 6 comprising at least two so called intermediate link capacitors is present between the two poles 4, 5. The intermediate link 6 of the converter illustrated in Fig 1 comprises two intermediate link capacitors 7, 8 connected in series. A midpoint 9, here called intermediate link midpoint, between these capacitors 7, 8 is here, as usually, connected to ground, so that in this way the potentials $+U_d/2$ and $-U_d/2$, respectively, are provided on the respective pole, in which $U_d$ is the voltage between the two poles 4, 5. However, the midpoint 9 does not necessarily have to be grounded, which is for example the case in SVC-applications.

A midpoint 10 of the series connection between the two main valves 2 and 3, which constitutes the phase output of the converter, is connected to an alternating voltage phase line 11. Said series connection is in this way divided into two equal parts with a main valve 2 and 3, respectively, in each such part. Thus, the converter comprises in the embodiment with three phase legs three phase outputs, which are connected to an alternating voltage phase line each of a three phase alternating voltage network. The phase outputs are normally connected to the alternating voltage network through electrical equipment in the form of breakers, transformers etc.

The respective main valve 2, 3 in the embodiment shown comprises a number of circuits 12 connected in series in accordance with the description above, which circuits each comprise a controllable semiconductor component 13, such as an IGBT, an IGCT, a MOSFET, a JFET, an MCT or a GTO, and a rectifying component 14 in the form of a diode, a so called free-wheeling diode, connected in anti-parallel therewith. Each main valve 2, 3 comprises in the embodiment shown in Fig 1 two circuits 12 of the type described above connected in series, but the circuits 12 connected in series may be more as well as fewer to the number. The number of said circuits 12 connected in series in the respective main valve 2, 3 may depending upon inter alia the voltage for which the converter is designed be from two up to several hundreds.

Each of the circuits 12 connected in series of the respective main valve 2, 3 is provided with a capacitor 15, here called snubber capacitor, connected in parallel with the controllable semiconductor component 13 of the circuit. The capacitance of the respective snubber capacitor 15 has to be so high that a good voltage distribution over the controllable semiconductor components 13 included in the respective main valve is possible when turning the controllable semiconductor components of the main valve off. The choice of capacitance of the snubber capacitors 15 is adapted to the case in question and depends among other things upon the current handling capability of the controllable semiconductor components 13 and the rectifying components 14. The snubber capacitors 15 contribute inter alia to a restriction of the turn-off losses of the main valves, i.e. the losses in the controllable semiconductor components when these are turned off.

When the semiconductor components 13 of a main valve are turned off the snubber capacitors connected across these semiconductor components 13 will be charged. If the snubber capacitors 15 still have this charge when the semiconductor components 13 are then turned on turn-on losses will occur in the semiconductor components 13. The snubber capacitors 15 having a comparatively high capacitance being an option in this context give in this case rise to very high turn-on losses, which turn-on losses make the use of high switching frequencies impossible. For eliminating or at least reducing these turn-on losses, and enable use of high switching frequencies, the snubber capacitors 15 are built in into a resonance circuit 16. It gets hereby possible to cause a discharging of the snubber capacitors 15 of a main valve when the semiconductor components 13 of this main valve shall be turned on, so that the voltage across the respective semiconductor component 13 is equal to or close to zero when it is turned on, by which the turn-on losses are restricted.

It is also possible to let a capacitor arranged between the phase output 10 and the midpoint 9 of the direct voltage intermediate link to be a part of the resonance circuit 16.

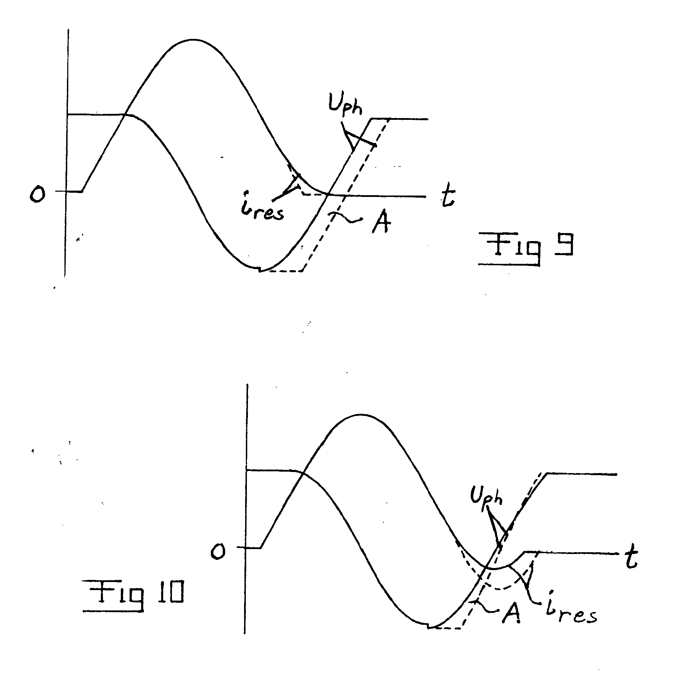

The converters illustrated in Figs 1 and 2 are of the type called ARCP-converters. The resonance circuit 16 is here of a so called quasi-resonance type, which means that the resonance is only initiated in connection with a commutation of the current between two main valves, i.e. when the potential on the phase output of the converter is to be changed.

The resonance circuit 16 comprises in the embodiment shown in Fig 1 a series connection of an inductor 17 and an auxiliary valve 18 between the phase output 10 and the midpoint 9 of said series connection of intermediate link capacitors 7, 8. The auxiliary valve 18 comprises here a set of two auxiliary valve circuits 19 connected in series, which each comprises a controllable semiconductor component 20, such as an IGBT, an IGCT, a MOSFET, a JFET, an MCT or a GTO, and a rectifying component 21 in the form of a diode connected in anti-parallel therewith. The controllable semiconductor components 20 of the two auxiliary valve circuits 19 are arranged in opposite polarity with respect to each other. This auxiliary valve 18 constitutes a bidirectional valve, which may be brought to conduct in one or the other direction. The auxiliary valve is according to an alternative embodiment realized through two thyristors connected in anti-parallel.

The expression auxiliary valve means in this description and the following patent claims a current valve included in a resonance circuit 16 of the converter.

The auxiliary valve 18 may also comprise a plurality of sets of auxiliary valve circuits connected in series when suitable, such as illustrated in Fig 2. The resonance circuit comprises in the embodiment illustrated in Fig 2 an auxiliary valve 18 comprising a plurality of sets 22 of auxiliary valve circuits connected in series, in which each set comprises two auxiliary valve circuits 19 of the type described above connected in series. Only two sets 22 of auxiliary valve circuits in the auxiliary valve 18 are shown in Fig 2, but the number of such sets may be considerably higher than this. The number of sets of auxiliary valve circuits of the auxiliary valve 18 may be optimized depending upon the number of circuits 12 of the main valves 2, 3 connected in series, and it depends among other things upon which voltage the auxiliary valve has to be able to block in the blocking state and the properties of the individual semiconductor components 20 used. It may more generally be noticed that the auxiliary valve 18 in the blocking state generally has only to block half the intermediate link voltage, i.e. $U_d/2$, in contrast to the main valves 2, 3, which each has to be dimensioned for being able to block the entire intermediate link voltage $U_d$ in the blocked state.

Each set 22 of auxiliary valve circuits 19 of the auxiliary valve 18 is suitably, such as illustrated in Fig 2, provided with a control unit 23 of its own, which is adapted to control the turning-on of the control semiconductor components 20 included in said set, in which all the control units 23 of the auxiliary valve are connected to a common control arrangement 24 adapted to send control signals to all these control units 23. A simultaneous control of all the auxiliary valve circuits 19 of the auxiliary valve is ensured by this.

Furthermore, it is preferred that each of the controllable semiconductor components 13 included in the main valves 2, 3 of the converter, as illustrated in Fig 2, is provided with a control unit 25 of its own adapted to control turn on and turn off of the semiconductor component 13, in which all control units 25 of the main valves are connected to a common control arrangement 24, which is adapted to send control signals to all control units 25 included in a main valve 2, 3. A simultaneous control of all the semiconductor components 13 in a main valve is ensured by this. The control units 23 of the auxiliary valve and the control units 25 of the main valves are here connected to one and the same control arrangement 24, which is preferred.

There are three basic processes or procedures for commutation of the phase current of a converter of the type illustrated in Figs 1 and 2, which basic processes will be briefly described in the following.

The main valve initially conducting current, i.e. when the commutation process is initiated, is in this description and in the appended claims called "the first main valve" or "the outgoing main valve" and the main valve to be current set through commutation is called "the second main valve". It is understood that it varies in each specific case which one of the two main valves 2, 3 illustrated in Figs 1 and 2 constitutes "the first" and "the second" main valve, respectively, at each specific commutation occasion.

"A commutation not assisted by the resonance circuit" means in this description and in the appended claims that the series connection of auxiliary valve 18 and inductor 17 included in the resonance circuit does not participate in the commutation process. However, the capacitive members, i.e. the snubber capacitors 15, participate of course in this commutation process. The expression "a commutation assisted by the resonance circuit" means correspondingly that the series connection of the auxiliary valve 18 and the inductor 17 included in the resonance circuit participates in the commutation process.

A first commutation process means commutation of the phase current from a controllable semiconductor device of a conducting first main valve 2, 3 to a rectifying member of a second main valve 3, 2 without assistance of the resonance circuit 16. The commutation process is initiated by turning the controllable semiconductor device of the first main valve off, in which the phase current $i_{ph}$ causes a charging of the capacitive members of the first main valve, i.e. the snubber capacitors 15 thereof, and a discharging of the capacitive members of the second main valve, i.e. the snubber capacitors 15 thereof. The phase potential will hereby swing from one pole to the other pole. The change of the current $i_{igbt}$ and the voltage $u_{igbt}$ of the controllable semiconductor device of the first main valve and the phase potential $u_{ph}$ during the commutation process are illustrated in Fig 3. The controllable semiconductor device of the first main valve is turned off at the time $t_0$, in which the current through the semiconductor device in the ideal case goes directly down to zero. The semiconductor device will in the reality have a certain post-conducting current. The phase current $i_{ph}$ will then cause a charging of the capacitive members of the first main valve, in which the voltage thereacross and thereby across the controllable semiconductor device increases substantially linearly from zero to a value $U_d$ corresponding to the voltage between the poles 4, 5. It is understood that the turning off of the semiconductor device of the first main valve may take place substantially without any power losses.

A second commutation process means commutation of the phase current from a controllable semiconductor device of the conducting first main valve 2, 3 to a rectifying member of a second main valve 3, 2 with assistance of the resonance circuit 16. This commutation process is utilized when the phase currents are low so as to speed up the commutation, and this commutation process is accordingly outside the scope of the present invention, but it is for the sake of illumination briefly described here. The commutation process is initiated by turning on the controllable semiconductor device (the embodiment according to Fig 1), or when applicable the controllable semiconductor devices (the embodiment according to Fig 2) having a voltage thereacross of the auxiliary valve. At the same time or before the semiconductor device(-s) of the auxiliary valve are turned on the semiconductor device of the first main valve is turned off. A resonance period is now started, during which the resonance circuit provides a current to the phase output 9 contributing to the charging of the snubber capacitors 15 of the first main valve and discharging of the snubber capacitors 15 of the second main valve. After the voltage across the second main valve has fallen to zero or to a value close to zero the controllable semiconductor device of the second main valve is turned on. In connection with or after the current in the resonance circuit has fallen to zero the controllable semiconductor device(-s) 20 initially turned on of the auxiliary valve 18 is (are) turned off.

The change of the current $i_{res}$ through the resonance circuit and the phase potential $u_{ph}$ during the commutation process described above is illustrated in Fig 4. The controllable semiconductor device(-s) of the auxiliary valve 18 is (are) turned on at the time $t_0$. In the case illustrated in Fig 4 the controllable semiconductor device of the first main valve is turned off at the same time $t_0$.

A third commutation process means commutation of the phase current from a rectifying member of a conducting first main valve 2, 3 to a controllable semiconductor device of a second main valve 3, 2 with the assistance of the resonance circuit. The commutation process is initiated by turning on the controllable semiconductor component (the embodiment according to Fig 1), or when applicable the controllable semiconductor components (the embodiment according to Fig 2), which has (have) a voltage thereacross of the auxiliary valve and turning off the controllable semiconductor devices of the first main valve 2, 3, in which a so-called ramping-up period is initiated. The current in the resonance circuit increases during the ramping-up period influenced by the voltage $u_{d1}$, $u_{d2}$ across each of the intermediate link capacitors 7, 8 from zero to a value corresponding to the phase current $i_{ph}$. When the current through the resonance circuit reaches a value corresponding to the phase current $i_{ph}$ the resonance period is started, during which the snubber capacitors 15 of the first main valve are charged and the snubber capacitors 15 of the second main valve are discharged. When the voltage across the second main valve has fallen to zero cr to a value close to zero the controllable semiconductor device of the second main valve is turned on. A so-called ramping-down period is started after the resonance period, during which the current decreases to zero from a value corresponding to the phase current $i_{ph}$. When the ramping down period has passed and the current in the resonance circuit has fallen to zero the controllable semiconductor component(-s) 20 initially turned on of the auxiliary valve 18 is (are) turned off.

The change of the current $i_{res}$ through the resonance circuit and the phase potential $u_{ph}$ during the commutation process described above are illustrated in Fig 5.

The converter according to the invention is preferably controlled through the PWM-technique (PWM = Pulse Width Modulation), in which the control arrangement 24 is provided with signals representing the desired commutation times from a modulator 30 schematically illustrated in Fig 6.

It may under certain circumstances be desired from the modulation point of view that a commutation sequence meaning a phase potential change from one pole to the other and back to the first ($+U_d/2 \rightarrow -U_d/2 \rightarrow +U_d/2$ or $-U_d/2 \rightarrow +U_d/2 \rightarrow -U_d/2$) may take place rapidly. Expressed in another way, this means that the time integral ($\Psi_{comm}$) of the voltage difference by which the phase potential deviates from the potential of the first pole shall be made small during a commutation sequence being as quick as possible. It may then be desired to make said time integral smaller than achievable by carrying out a conventional commutation, according to the above, from the first pole to the second pole and then without any delay a conventional commutation from the second pole back to the first pole. The method according to the invention may under these circumstances be utilized for reducing said time integral further.

The converter according to the invention is provided with means for measuring the phase current $i_{ph}$, which are schematically indicated at 31 in Fig 6, which means is adapted to transmit measuring signals to the control arrangement 24.

Thus, the method according to the invention relates to carrying out two subsequent commutation processes for changing the phase potential on the phase output 10 from the potential of a first 4, 5 of the poles to that of a second 5, 4 of the poles and then back to that of the first pole, i.e. carrying out the commutation processes according to Figs 3 and 5 in a row. More exactly, the method according to the invention is directed to start the second commutation before the first one is terminated. This means in the practice that when the commutation process according to Fig 3 is started, i.e. from the controllable semiconductor device to the rectifying member, the commutation process according to Fig 5 is started, i.e. from the rectifying member to the controllable semiconductor device, before the entire voltage between the two poles of the direct voltage side

$U_d$ is applied across the semiconductor device turned off according to Fig 3. Conversely, when starting by a commutation process according to Fig 5, i.e. from a rectifying member to a controllable semiconductor device, the commutation process according to Fig 3 is begun by turning the controllable semiconductor device off before the commutation process according to Fig 5 is completely terminated. The modulator determines if and in which degree the method shall be utilized, i.e. how great the overlap of the first and the second commutations shall be. The requirement that the system after the commutation sequence shall return to the initial state puts an upper limit for the size of the overlap. How great the different time overlaps may be at a maximum depends upon the magnitude of the phase current with respect to the peak value of the current in the resonance circuit $\hat{i}_{res}$, which is defined as

$$\hat{i}_{res} = \frac{U_d}{2}\sqrt{\frac{C_s}{L_{aux}}}$$

according to the above.

A more detailed description of the commutation sequences according to the invention is given in the following.

The case in which the commutation process according to Fig 3 is the first one and the one according to Fig 5 is the second one is discussed. The control arrangement 24 in the converter according to the invention is then adapted to deliver control signals in the following order:

- in a first step a turn-off signal to the controllable semiconductor 13 conducting the phase current of the first main valve,
- in a second step a turn-on signal to the controllable semiconductor component 20, which had initially no voltage thereacross of the auxiliary valve 18,
- in a third step a turn-on signal to said controllable semiconductor device in the first main valve 2 when the capacitive member 15 associated therewith has been discharged so that the voltage across this main valve has fallen to substantially zero, and
- in a fourth step a turn-off signal to the controllable semiconductor component 20 of the main valve turned on in the second step.

In the case that it is desired to make said time integral $\Psi_{comm}$ smaller than achievable through a conventional method, the control arrangement is adapted to in the second step send the turn-on signal to the controllable semiconductor component 20 of the auxiliary valve before the voltage across the first main valve has become approximately just as high as the intermediate link voltage $U_d$ between the two poles of the direct voltage side of the converter. For deciding how much earlier the second commutation process may be started than the first one is terminated the converter comprises a member 32 adapted to compare the phase current measured by the means 31 with $\hat{i}_{res}$. Two cases may then occur:

1. The comparison of the comparing member shows that the phase current $i_{ph}$ is higher than $\hat{i}_{res}$, and the second step may then be started at any time after starting the first step, even at the same time as this step. Thus, it is possible to send a turn-on signal to the controllable semiconductor component of the auxiliary valve at the same time as a turn-off signal is sent to the controllable semiconductor device conducting the phase current of the first main valve. Exactly this case is illustrated in Fig 8. An already known conventional control of the two commutation processes according to Figs 3 and 5 one after the other is shown through dashed lines, while the full lines illustrate a control according to a maximum utilization of the invention, in which the second commutation process is started at the same time as the first one by starting said second step at the same time as the first step. The development of the phase potential $u_{ph}$ on the phase output 10 and the current $i_{res}$ through the auxiliary valve is illustrated here. It appears that the maximum possible won voltage time area $\delta\Psi_{comm}$ is considerable, which means a possibility to an increase of the maximum modulation degree of the converter.

2. The comparison of the comparing member shows that the phase current $i_{ph}$ is lower than $\hat{i}_{res}$. The turn-on signal according to step 2 may in this case be sent to the controllable semiconductor component of the auxiliary valve, i.e. the auxiliary valve may be turned on, not earlier than when the voltage $u_s$ across the controllable semiconductor device 13 turned off in step 1 has increased to a level being at least

$$\frac{U_d}{2} + \sqrt{\frac{L_{aux}}{C_s}\left(\hat{i}_{res}^2 - i_{ph}^2\right)}$$

This is required for making the phase potential $u_{ph}$ completely change to that of the opposite pole of the intermediate link to the one initially connected to the phase output when the controllable semiconductor device conducted the phase current, which in its turn is necessary for completing the subsequent resonant transition back to the original state.

If instead the first commutation process is started at the time when the phase current flows through a rectifying member of one of the main valves, the first one of the two commutation processes is started by in a first step sending a turn-on signal to the controllable semiconductor component 20 having a voltage thereacross of the auxiliary valve and a turn-off signal to the controllable semiconductor component 13' connected in anti-parallel with the rectifying member conducting the phase current in the second main valve 3. More exactly, the control arrangement 24 is then adapted to carry out the two subsequent commutation processes by delivering in the following order:

- in a first step a said turn-on signal and a said turn-off signal to the controllable semiconductor component 20 of the auxiliary valve and the controllable semiconductor device 13' connected in anti-parallel with the conducting rectifying member 14', respectively,
- in a second step a turn-on signal to the controllable semiconductor device 13 in the first main valve 2 when as a consequence of the first step the capacitive member 15 associated therewith has been discharged so that the voltage across this valve has become substantially zero,
- in a third step a turn-off signal to the controllable semiconductor device 13 of the first main valve 2 turned on in the second step,
- in a fourth step a turn-off signal to the controllable semiconductor component 20 of the auxiliary valve 18 turned on in the first step.

Two cases may occur depending upon the result of the comparison by the comparing member of the phase current $i_{ph}$ with $\hat{i}_{res}$, namely according to the following:

1. If the comparison of the comparing member shows that the phase current $i_{ph}$ measured is higher than $\hat{i}_{res}$, the turn-off signal may in the third step be sent to the controllable semiconductor device of the first main valve at the earliest when the current through said auxiliary valve ires has decreased below

$$i_{ph} - \sqrt{i_{ph}^2 - \hat{i}_{res}^2} \quad .$$

This is necessary for making the current in the auxiliary valve return to zero so as to allow a natural turn-off of the auxiliary valve. This case is shown in Fig 9, which shows results obtained by simulations. A process with a maximum utilization of the method according to the invention (full lines) is here compared, such as in Fig 8, with a process utilizing a conventional method with the commutation processes according to Fig 5 and Fig 3, one after the other. The voltage time area $\delta\Psi_{comm}$ won by utilizing the method according to the invention results in a possibility to an increase of the maximum modulation or control degree of the converter according to the invention.

2. The comparison of the comparing member shows that the phase current $i_{ph}$ is lower than $\hat{i}_{res}$, and the sending of the turn-off signal to the controllable semiconductor device in the third step may then take place considerably earlier, it is even possible to refrain from turning the controllable semiconductor device in the second step on. This results in the quickest possible combined commutation process. It is here also possible to turn the auxiliary valve circuit being anti-parallel with the one turned on in the first step on at a time before the current in the resonance circuit reaches zero, so that in such a case the current will continue to flow in the opposite direction after the zero crossing and thereby speed up the recharging of the snubber capacitors 15. This case is illustrated in Fig 10 which shows the result of a simulation. A comparison similar to the one carried out in Figs 8 and 9 of a case when the method according to the invention is utilized to a maximum and a method according to the prior art also takes place here. The gain in voltage time area $\delta\Psi_{comm}$ and thereby the increase of the maximum modulation degree of the converter is also here considerable.

The invention is of course not in any way restricted to the preferred embodiments described above, but many possibilities to modifications thereof will be apparent to a person with skill in the art without departing from the basic idea of the invention as defined in the appended claims.

It is of course possible to determine the exact size of the time overlap between the two commutation processes depending upon different commutation parameters, such as the magnitude of the phase current measured with respect to the peak value of the phase current during a period thereof, while ensuring that the above conditions are met.

**Claims**

1. A converter comprising:

   - a series connection of at least two main valves (2, 3) between two poles (4, 5), a positive and a negative one, of a direct voltage side of the converter, said main valves each comprising a controllable semiconductor device and a rectifying member connected in anti-parallel therewith, an alternating voltage phase line being connected to a midpoint (10), called phase output, of the series connection between two main valves while dividing the series connection into two equal parts,

   - a series connection of at least two intermediate link capacitors (7, 8) between the two poles (4, 5) of the direct voltage side of the converter, which series connection through a midpoint (9), called intermediate link midpoint, is divided into two equal parts,

   - a resonance circuit (16) comprising a series connection of an inductor (17) and an auxiliary valve (18) between the phase output (10) and the intermediate link midpoint (9), said auxiliary valve comprising at least two controllable semiconductor components (20) arranged in opposite polarity with respect to each other, in which the resonance circuit further comprises for each main valve at least one capacitive member (15), which is connected in series with said inductor (17) and auxiliary valve (18) and in parallel with the main valve (2, 3),

   - means (31 ) for measuring the phase current ($i_{ph}$) in the phase output, and

   - a control arrangement (24) for controlling turn on and turn off of the controllable semiconductor devices of the main valves and the controllable semiconductor components of the auxiliary valve, in which the control arrangement, when carrying out the commutation process, is adapted to deliver control signals to main valves and auxiliary valve participating in the commutation process for turning them on and off at different times in a determined order for changing the phase potential on the phase output from the potential of one of said poles to that of the other pole,

   **characterized in that** the control arrangement, when carrying out two subsequent said commutation processes for changing the phase potential on the phase output from the potential of a first of the poles to that of a second of the poles and then back to that of the first pole and when the time integral of the difference voltage by which the phase potential deviates from the potential of the first pole is desired to be reduced with respect to what is obtainable by a method in which a conventional commutation first is made from one pole to the other pole and thereafter without any delay a conventional commutation is made back to the first pole, is adapted to start the second commutation process at a start time lying in a period before an end time for completing the first commutation process, and that the control arrangement (24) is adapted to make the limits for the time interval between said start time and end time depending upon information about the magnitude of the phase current received from said means (31).

2. A converter according to claim 1, **characterized in that** it comprises members (32) adapted to compare the phase current measured by said means with $\hat{i}_{res}$, in which

$$\hat{i}_{res} = \frac{U_d}{2}\sqrt{\frac{C_s}{L_{aux}}}$$

in which $U_d$ is the voltage between said two poles on the direct voltage side of the converter, $L_{aux}$ is the inductance of the resonance circuit and $C_s$ the sum of the total snubber capacitance connected in series for said main valves and when present the capacitance of a capacitor possibly located between the phase output and the intermediate link midpoint, and that the control arrangement is adapted to make the limits for said time interval depending upon the result of this comparison.

3. A converter according to claim 2, **characterized in that** the control arrangement (24) is adapted to determine the limits for said time interval according to a first basic principle if the comparing member shows that the phase current is higher than $\hat{i}_{res}$ and according to a second principle different from the first one if the comparing member shows that the phase current is lower than $\hat{i}_{res}$.

4. A converter according to any of claims 1-3, **characterized in that** the control arrangement (24) is adapted to, in a state in which the phase current flows through a controllable semiconductor device (13) of a first main valve at the time for starting the first of said two commutation processes, carry out the two commutation processes by delivering control signals in the following order:

   - in a first step a turn-off signal to the controllable semiconductor device (13) conducting the phase current in the first main valve,

   - in a second step a turn-on signal to the controllable semiconductor component (20), which had initially no voltage thereacross, of the auxiliary valve (18),

   - in a third step a turn-on signal to said controllable semiconductor device (13) in the first main valve when the capacitive member (15) associated therewith has been discharged so that the voltage across this main valve has fallen to substantially zero, and

   - in a fourth step a turn-off signal to the controllable semiconductor component (20) of the auxiliary valve turned on in the second step, and that the control arrangement (24) is adapted to send the turn-on signal to the controllable semiconductor component of the auxiliary valve in the second step before the voltage across said first main valve has become approximately just as high as the intermediate link voltage between said two poles (4, 5) of the direct voltage side of the converter.

5. A converter according to claims 2 and 4, **characterized in that** the control arrangement (24) is adapted to, when information delivered by said comparing member (32) about a higher phase current $i_{ph}$ than $\hat{i}_{res}$ in the second step send the turn-on signal to the controllable semiconductor component of the auxiliary valve before the voltage across the first main valve after turning off thereof would have reached said pole direct voltage.

6. A converter according to claim 5, **characterized in that** the control arrangement (24) is adapted to in the second step send said turn-on signal to the controllable semiconductor component (20) of the auxiliary valve substantially at the same time as sending the turn-off signal to the controllable semiconductor device (13) of the first main valve in the first step.

7. A converter according to claims 2 and 4, **characterized in that** the control arrangement (24) is adapted to, when information is delivered by said comparing member (32) about a lower phase current $i_{ph}$ than $\hat{i}_{res}$, in the second step send the turn-on signal to the controllable semiconductor component of the auxiliary valve when the voltage $u_s$ across said first main valve as a result of the turning-off in the first step has increased to be just as high or exceeded

$$\frac{U_d}{2} + \sqrt{\frac{L_{aux}}{C_s}\left(\hat{i}_{res}^2 - i_{ph}^2\right)}$$

8. A converter according to any of claims 1-3, **characterized in that** the control arrangement (24) is adapted to, when the first commutation process is started at a time when the phase current flows through a rectifying member of one of the main valves, here called second, start the first of said two commutation processes by in a first step send a turn-on signal to that controllable semiconductor component (20) which has a voltage thereacross in the auxiliary valve (13') and a turn-off signal to the controllable semiconductor device connected in anti-parallel to the rectifying member (14') conducting the phase current in the other main valve.

9. A converter according to claim 8, **characterized in that** the control arrangement (24) is adapted to carry out said two subsequent commutation processes by delivering in the following order:

   - in a first step a said turn-on signal and a said turn-off signal to the controllable semiconductor component (20) of the auxiliary valve and the controllable semiconductor device (13') connected in anti-parallel with the conducting rectifying member (14'), respectively,

   - in a second step a turn-on signal to the controllable semiconductor device (13) in the first main valve when as a consequence of the first step the capacitive member (15) associated therewith has been discharged so that the voltage across this valve has become substantially zero,

   - in a third step a turn-off signal to the controllable semiconductor device (13) of the first main valve turned on in the second step,

   - in a fourth step a turn-off signal to the controllable semiconductor component (20) of the auxiliary valve turned on in the first step:

10. A converter according to claims 2 and 9, **characterized in that** the control arrangement (24) is adapted to, when the comparing member (32) delivers information about a higher phase current ($i_{ph}$) than $\hat{i}_{res}$, in the third step send the turn-off signal to the controllable semiconductor device of the first main valve at or after the time when the current through said auxiliary valve $i_{res}$ has decreased below

$$i_{ph} = \sqrt{i_{ph}^2 - \hat{i}_{res}^2} \ .$$

11. A converter according to claims 2 and 9, **characterized in that** the control arrangement (24) is adapted to, when receiving information from the comparing member (32) about a lower phase current ($i_{ph}$) than $\hat{i}_{res}$, send said turn-off signal in the third step to the controllable semiconductor device (13) of the first main valve with a time delay greater than zero with respect to the delivery of said turn-on signal in the second step.

12. A converter according to claims 2 and 8, **characterized in that** the control arrangement (24) is adapted to, when receiving information from the comparing member (32) about a lower phase current ($i_{ph}$) than $\hat{i}_{res}$ when starting said first of said two commutation processes, send a turn-off signal to said controllable semiconductor component (20) of the auxiliary valve as the first control signal following the signals delivered in the first step.

13. A converter according to claim 11 or 12, **characterized in that** the control arrangement (24) is for influencing the second of said two commutation processes in accelerating direction adapted to send a turn-on signal to the controllable semiconductor component of the auxiliary valve being arranged in opposite polarity with respect to the semiconductor component turned on in the first step before the current in the resonance circuit has decreased to zero so as to make the resonance circuit (16) able to continue to conduct current in the opposite direction after a zero crossing of the current in the resonance circuit for accelerated discharging the capacitive member (15) associated with said rectifying member (14') and starting a conduction of the rectifying member again.

14. A method for controlling a converter, which comprises:

   - a series connection of at least two main valves (2, 3) between two poles (4, 5), a positive and a negative one, of a direct voltage side of the converter, said main valves each comprising a controllable semiconductor device and a rectifying member connected in anti-parallel therewith, an alternating voltage phase line being connected to a midpoint (10), called phase output, of the series connection between two main valves while dividing the series connection into two equal parts,

   - a series connection of at least two intermediate link capacitors (7, 8) between the two poles (4, 5) of the direct voltage side of the converter, which series connection through a midpoint (9), called intermediate link midpoint, is divided into two equal parts,

   - a resonance circuit (16) comprising a series connection of an inductor (17) and an auxiliary valve (18) between the phase output (10) and the intermediate link midpoint (9), said auxiliary valve comprising at least two controllable semiconductor components (20) arranged in opposite polarity with respect to each other, in which the resonance circuit further comprises for each main valve at least one capacitive member (15), which is connected in series with said inductor (17) and auxiliary valve (18) and in parallel with the main valve (2, 3),

- means (31) for measuring the phase current ($i_{ph}$) in the phase output, and

- a control arrangement (24) for controlling turn on and turn off of the controllable semiconductor devices of the main valves and the controllable semiconductor components of the auxiliary valve, in which the control arrangement, when carrying out the commutation process, is adapted to deliver control signals to main valves and auxiliary valve participating in the commutation process for turning them on and off at different times in a determined order for changing the phase potential on the phase output from the potential of one of said poles to that of the other pole, and in which the control arrangement is adapted to, when a measured value of the phase current exceeds a predetermined value, when starting a said commutation process with the phase current flowing through a controllable semiconductor device of a main valve, carry out the commutation process without assistance of the resonance circuit,

**characterized in that**, when carrying out two subsequent said commutation processes for changing the phase potential on the phase output from the potential of the first one of the poles to that of the second of the poles and then back to that of the first pole and when the time integral of the difference voltage by which the phase potential deviates from the potential of the first pole is desired to be made lower than obtainable by a method in which a conventional commutation is first done from one pole to the other and then without any delay a conventional commutation is made back to the first pole, the second commutation process is started at a time lying in a period before an end time for completing the first commutation process, and that the limits for the time interval between said start time and end time is made dependent upon the magnitude of the measured phase current.

15. A method according to claim 14, **characterized in that** the measured phase current is compared with $\hat{i}_{res}$, in which $\hat{i}_{res}$ is

$$\frac{U_d}{2}\sqrt{\frac{C_s}{L_{aux}}}$$

in which $U_d$ is the voltage between said two poles on the direct voltage side of the converter, $L_{aux}$ is the inductance of the resonance circuit and $C_s$ the sum of the total snubber capacitance connected in series for said main valves and when present the capacitance of a capacitor possibly located between the phase output and the intermediate link midpoint, and that the control arrangement is adapted to make the limits for said time interval depending upon the result of this comparison.

16. A method according to claim 15, **characterized in that** the limits for said time interval is determined according to a first basic principle if said comparison shows that the phase current is higher than $\hat{i}_{res}$ and according to a second basic principle different from the first one if the comparison shows that the phase current is lower than $\hat{i}_{res}$.

17. A method according to any of claims 14-16, **characterized in that** in a state in which the phase current flows through the controllable semiconductor device of a first main valve at the time for starting the first of said two commutation processes the two commutation processes are carried out by delivering control signals in the following order:

- in a first step a turn-off signal to the controllable semiconductor device (13) conducting the phase current in the first main valve,

- in a second step a turn-on signal to the controllable semiconductor component (20), which had initially no voltage thereacross, of the auxiliary valve (18),

- in a third step a turn-on signal to said controllable semiconductor device in the first main valve when the capacitive member (15) associated therewith has been discharged so that the voltage across this main valve has fallen to substantially zero, and

- in a fourth step a turn-off signal to the controllable semiconductor component (20) of the auxiliary valve turned on in the second step, and that the turn-on signal is in the second step sent to the controllable semiconductor component of the auxiliary valve before the voltage across said first main valve has become approximately just as high as the intermediate link voltage between said two poles (4, 5) of the direct voltage side of the converter.

18. A method according to claims 15 and 17, **characterized in that** when the comparison delivers a result that the phase current is higher than $\hat{i}_{res}$ the turn-on signal is in the second step is sent to the controllable semiconductor component of the auxiliary valve before the voltage across the first main valve (2) after turning this off would have reached said intermediate link voltage.

19. A method according to claim 18, **characterized in that** in the second step said turn-on signal is sent to the controllable semiconductor component (20) of the auxiliary valve substantially at the same time as sending the turn-off signal to the controllable semiconductor device of the first main valve in the first step.

20. A method according to claims 15 and 17, **characterized in that** when said comparison delivers a result that the phase current is lower than $\hat{i}_{res}$ the turn-on signal is in the second step sent to the controllable semiconductor component (20) of the auxiliary valve when the voltage $u_s$ across said first main valve as a result of the turning-off in the first step has increased to be just as high or exceeded

$$\frac{U_d}{2} + \sqrt{\frac{L_{aux}}{C_s}\left(\hat{i}_{res}^2 - i_{ph}^2\right)}$$

21. A method according to any of claims 14-16, **characterized in that** when starting the first commutation process at a time when the phase current flows through a rectifying member (14') of one of the main valves, here called second, the first of said two commutation processes is started by in a first step send a turn-on signal to the controllable semiconductor component (20) having a voltage thereacross of the auxiliary valve (18) and a turn-off signal to the controllable semiconductor device (13') connected in anti-parallel with the rectifying member conducting the phase current in the second main valve (3).

22. A method according to claim 21, **characterized in that** said two subsequent commutation processes are carried out by delivering in the following order:

- in a first step a said turn-on signal and a said turn-off signal to the controllable semiconductor component (20) of the auxiliary valve and the controllable semiconductor device (13') connected in anti-parallel with the conducting rectifying member (14'), respectively,

- in a second step a turn-on signal to the controllable semiconductor device (13) in the first main valve (2) when as a consequence of the first step the capacitive member (15) associated therewith has been discharged so that the voltage across this valve has become substantially zero,

- in a third step a turn-off signal to the controllable semiconductor device (13) of the first main valve turned on in the second step,

- in a fourth step a turn-off signal to the controllable semiconductor component (20) of the auxiliary valve turned on in the first step.

23. A method according to claims 15 and 22, **characterized in that** when said comparison delivers a result that the phase current is higher than $\hat{i}_{res}$ the turn-off signal is in the third step sent to the controllable semiconductor device (13) of the first main valve at or after the time when the current through said auxiliary valve $\hat{i}_{res}$ has decreased below

$$i_{ph} - \sqrt{i_{ph}^2 - \hat{i}_{res}^2} \ .$$

24. A method according to claims 15 and 22, **characterized in that** when said comparison delivers a result that the phase current is lower than $\hat{i}_{res}$ said turn-off signal is in the third step sent to the controllable semiconductor device (13) of the first main valve with a time delay with respect to the sending of the turn-on signal in the second step.

25. A method according claims 15 and 21, **characterized in that** when said comparison delivers a result that the phase current is lower than $\hat{i}_{res}$ a turn-off signal is at the beginning of the first of said two commutation processes sent to said controllable semiconductor component (20) of the auxiliary valve as a first control signal following the signals delivered in the first step.

26. A method according to claim 24 or 25, **characterized in that** for influencing the second of said two commutation processes in accelerating direction a turn-on signal is sent to the controllable semiconductor component of the auxiliary valve (20), which is arranged in opposite polarity with respect to the semiconductor component turned on in the first step before the current in the resonance circuit has fallen to zero for enabling the resonance circuit (16) to continue to conduct current in the opposite direction after a zero-crossing of the current in the resonance circuit for an accelerated discharging of the capacitive member associated with said rectifying member and starting the conducting of the rectifying member again.

27. A computer program directly loadable into the internal memory of a digital computer and comprising software code portions for carrying out the steps according to any of claims 14-26 when the program is run on a computer.

28. A computer program according to claim 27 provided at least partially through a network as the Internet.

29. A computer readable medium having a program recorded thereon, in which the program is adapted to make a computer carry out the steps according to any of claims 14-26.

Fig 1

Fig 6

Fig 2

Fig 3

Fig 4

Fig 5

Fig 7

Fig 8

$U_{ph}$

$i_{res}$

$A$

Fig 9

$U_{ph}$

$A$

$i_{res}$

Fig 10